# EUROPEAN PATENT SPECIFICATION

(11) **EP 0 989 146 B1**
(45) Date of publication and mention of the grant of the patent: **10.08.2005**
(21) Application number: 99307442.6
(22) Date of filing: 21.09.1999
(51) Int. Cl.: C08G 18/18

(54) **Catalyst for production of polyurethane**
Katalysator für Polyurethanherstellung
Catalyseur pour la production de polyuréthane

(30) Priority: 21.09.1998 JP 26613598
(43) Date of publication of application: 29.03.2000
(73) Proprietor: TOSOH CORPORATION, Shinnanyo-shi, Yamaguchi-ken (JP)
(72) Inventor: Kometani, Hiroyuki, Shinnanyo-shi, Yamaguchi (JP); Tamano, Yutaka, Tokuyama-shi, Yamaguchi (JP); Ishida, Masaki, Kudamatsu, Yamaguchi (JP)
(74) Representative: Copsey, Timothy Graham

(56) References cited:
- DE-A- 3 610 434
- US-A- 4 186 255
- US-A- 4 349 638
- US-A- 4 450 246

## Description

The present invention relates to a catalyst for production of polyurethane starting from a polyol and a polyisocyanate in the presence of a catalyst, and optionally, of a blowing agent, a foam stabilizer, a crosslinking agent, or the like. The present invention also relates to a process for production of a polyurethane employing the above catalyst. Specifically, the catalyst comprises a mixture of a tertiary amine and a saturated dicarboxylic acid, and the process employs this catalyst.

### Description of the Related Art:

The polyurethane is produced from a polyol and a polyisocyanate in the presence of a catalyst, and optionally, of a blowing agent, a foam stabilizer, and a crosslinking agent. Known catalysts for the polyurethane reaction include organic tin compounds, and tertiary amine compounds. The catalyst is used singly or in combination of two or more thereof industrially.

As the results of remarkable development of the polyurethane industry in recent years, the molded polyurethane articles become larger in size and more complicated in shape thereof. On the other hand, for higher productivity of the polyurethane, the demolding time is required to be as shorter as possible. To meet the requirements, the polyol as the source material is selected from reactive amine-polyols having a tertiary amine skeleton, and reactive modified polyols having primary OH groups at the ends of the molecule. Further, the organic polyisocyanate is selected from diphenyl-4,4'-diisocyanate type compounds which are more reactive than toluene diisocyanate type compounds, or the mixing ratio thereof is increased to shorten the demolding time. For such a highly reactive source materials, conventional polyurethane reaction catalyst employing an organotin compound or a tertiary amine causes inconveniences. For example, in combination of the more reactive source materials and a conventional catalyst, the polymerization reaction begins or the liquid viscosity rises immediately after mixing of the organic polyisocyanate and the polyol as the source materials. This rapid decrease of the fluidity of the liquid mixture can prevent distribution of the liquid mixture to the corners of a large mold, or can cause unfilled or lacking portions of the shaped article when the mold is complicated. Otherwise, the reaction can proceed before the mold closure, or the molded polyurethane can be cracked. On the other hand, with a less active catalyst, the reaction proceeds at a lower speed to delay the demolding time to lower the productivity. To overcome such inconveniences and raise the productivity, development of a delayed action type polyurethane reaction catalyst is desired which is less active in the initial stage of the reaction, and becomes more active with the progress of the foaming reaction.

The delayed action type catalyst having such properties is exemplified by an organic carboxylic acid salt of a tertiary amine compound as disclosed by JP-A-54-130697 and JP-A-57-56491 ("JP-A" herein means unexamined published Japanese patent application). The organic carboxylic acid salt of a tertiary amine does not exhibit its inherent catalytic activity in the initial stage of the polyurethane formation reaction because the entire or a part of the amino groups is blocked by the organic carboxylic acid. However, with the progress of the urethane formation reaction, the temperature of the reaction mixture rises to cause thermal dissociation of the tertiary amine to exhibit the inherent catalytic activity of the tertiary amine. The organic carboxylic acid for the delayed action type catalyst includes usually formic acid, cyanoacetic acid, and 2-ethylhexanoic acid.

The known delayed action type catalysts generally contain an a large amount of the organic carboxylic acid to retard the initial activity of the tertiary amine as the base material of the formulation. This lowers the pH of the catalyst. The low-pH catalyst is liable to corrode the construction material such as a catalyst storage vessel and a reaction apparatus. This is a serious disadvantage, so that a less corrosive delayed action catalyst is desired.

At a lower ratio of the organic carboxylic acid to the tertiary amine for raising the pH of the catalyst to decrease the corrosiveness and to overcome the above disadvantage, the blocking of amine by the acid is insufficient for achieving the intended delayed action. JP-A-7-233234 discloses a delayed action type catalyst composed of a salt of a hydroxyl group-containing carboxylic acid such as citric acid and malic acid, and a tertiary amine. This catalyst, however, is still corrosive practically.

### Summary of the Invention:

The present invention intends to provide a polyurethane reaction catalyst which has effectively delayed activity and yet is remarkably less corrosive.

The catalyst for polyurethane production of the present invention comprises a mixture of a tertiary amine selected from the group consisting of N,N,N',N'-tetramethylethylene diamine, N,N,N',N'-tetramethylpropylenediamine, N,N,N',N",N"-pentamethyldiethylenetriamine, N,N,N',N",N"-pentamethyl(3 -aminopropyl)ethylenediamine, N,N,N',N",N"-pentamethyldipropylenetriamine, N,N,N',N'-tetramethylguanidine, 1,8-diazabicyclo[5.4.0]undecene-7, triethylenediamine, N,N,N',N'-tetramethylhexamethylenediamine, N-methyl-N'-(2-dimethylaminoethyl)piperazine, N,N'-dimethylpiperazine, dimethylcyclohexylamine, N-methylmorpholine, N-ethylmorpholine, bis(2-dimethylaminoethyl) ether, 1-methylimidazole, 1,2-dimethylimidazole, 1-isobutyl-2-methylimidazole, and 1-dimethylaminopropylimidazole, and a saturated dicarboxylic acid represented by General Formula:

HOOC- (CH₂)ₙ-COOH

where n is an integer of from 2 to 14, characterized in that, wherein the tertiary amine and the saturated dicarboxylic acid are mixed in the ratio such that an aqueous solution of the mixture shows a pH not lower than 7.0.

### Detailed Description of the Preferred Embodiment:

The present invention is described below in detail.

The saturated dicarboxylic acid employed in the present invention is shown by the general formula above, specifically including succinic acid, glutaric acid, adipic acid, pimelic acid, suberic acid, azelaic acid, sebacic acid, undecanedioic acid, decane-dicarboxylic acid, 1,11-undecane-dicarboxylic acid, 1,12-dodecane-dicarboxylic acid, and hexadecanedioic acid. Of the above acids, adipic acid, suberic acid, and sebacic acid are preferred. The above saturated dicarboxylic acids may be used singly or in combination of two or more thereof. The catalyst prepared by addition of oxalic acid (n=0 in the above general formula), or malonic acid (n=1 in the above general formula) to a tertiary amine is highly corrosive regardless of the amount of addition of the acid.

The mixture of the tertiary amine and the saturated carboxylic acid employed in the present invention is solid usually. Therefore, the solid mixture is preferably used in an a liquid form of a solution in a solvent. The solvent is not specially limited, including water, ethylene glycol, diethylene glycol, dipropylene glycol, butanediol, and high-molecular polyols. Of these solvent, particularly preferred are water, ethylene glycol, and diethylene glycol. The solvent is used suitably in an amount to give the catalyst weight ratio of 10-80% by weight, but the amount is not specially limited thereto.

The mixing ratio of the tertiary amine and the saturated dicarboxylic acid is important in the present invention. The mixing ratio should be adjusted to obtain a pH value of 7.0 or higher of an aqueous solution of the mixture of the tertiary amine and the dicarboxylic acid. The aqueous mixture solution having a pH lower than 7.0 is highly corrosive, tending to corrode construction materials such as the catalyst storage vessel and the reaction apparatus. The upper limit of the pH of the aqueous solution of the mixture is not specially limited. However, with an insufficient amount of the saturated carboxylic acid mixed, the blocking of the amine by the acid is insufficient, not giving desired delaying effect. The reactivity and the reaction profile of the polyurethane formulation is adjusted by adjusting properly the amount of the saturated dicarboxylic acid so that the pH of the aqueous solution of the mixture is 7.0 or higher.

Of the tertiary amines used in the present invention, particularly preferred are triethylenediamine, bis(2-dimethylaminoethyl) ether, N,N,N',N",N"-pentamethyldiethylenetriamine, N,N,N',N'-tetramethylethylenediamine, N,N,N',N'-tetramethylhexamethylenediamine, dimethylcyclohexylamine, and 1,2-dimethylimidazole.

The catalyst of the present invention is useful for production of polyurethane by reaction, for example, of a polyol, and an organic polyisocyanate in the presence of the catalyst, and optionally of a blowing agent, a surfactant, a crosslinking agent, and other additives.

The catalyst of the present invention gives excellent delay effect and has low corrosiveness in the polyurethane production. The amount of the catalyst used in the reaction ranges usually from 0.01 to 10 parts, preferably 0.05 to 5 parts based on 100 parts of the polyol used. The catalyst of the present invention may be formed by adding the tertiary amine and the saturated dicarboxylic acid separately into a polyol premix.

In the production process of the present invention, a catalyst other than the mixture of the tertiary amine and the saturated dicarboxylic acid may be additionally used. The additional other catalyst may be any of known tertiary amines and quaternary ammonium salts. The tertiary amines include
N,N,N',N'-tetramethylethylenediamine,
N,N,N',N'-tetramethylpropylenediamine,
N,N,N',N",N"-pentamethyldiethylenetriamine,
N,N,N',N",N"-pentamethyl(3-aminopropyl)ethylenediamine,
N,N,N',N",N"-pentamethyldipropylenetriamine,
N,N,N',N'-tetramethylguanidine,
1,3,5-tris(N,N-dimethylaminopropyl)hexahydro-s-triazine,
1,8-diazabicyclo[5.4.0]undecene-7,
triethylenediamine,
N,N,N',N'-tetramethylhexamethylenediamine,
N-methyl-N'-(2-dimethylaminoethyl)piperazine,
N,N'-dimethylpiperazine, dimethylcyclohexylamine,
N-methylmorpholine, N-ethylmorpholine,
bis(2-dimethylaminoethyl) ether,
1-methylimidazole, 1,2-dimethylimidazole,
1-isobutyl-2-methylimidazole, and
1-dimethylaminopropylimidazole.
The additional tertiary amine is used in an amount ranging preferably from 0 to 3.0 parts by weight based on 1.0 part by weight of the mixture of the tertiary amine and the saturated dicarboxylic acid of the present invention, but is not specially limited thereto.

In the production process of the present invention, an organometallic catalyst may be used in combination with the saturated dicarboxylic acid salt of the tertiary amine. The organometallic catalyst includes stannous diacetate, stannous dioctoate, stannous dioleate, stannous dilaurate, dibutyltin oxide, dibutyltin diacetate, dibutyltin dilaurate, dibutyltin dichloride, dioctyltin dilaurate, lead octanoate, lead naphthenoate, nickel naphthenoate, and cobalt naphthenoate. Of these, preferred are organotin catalysts, more preferred are stannous dioctoate, and dibutyltin dilaurate. The amount of the organometallic catalyst, when it is used in the present invention, ranges usually from 0.01 to 5.0 parts by weight, preferably from 0.05 to 3.0 parts by weight based on 100 parts by weight of the polyol. With the organometallic compound of not more then 0.05 part by weight, the formed polyurethane is liable to crack, whereas with 3.0 parts or more thereof, the formed polyurethane will shrink.

The delayed action catalyst of the present invention is useful for any of polyurethanes including flexible slab foams, flexible molded foams, semi-rigid foams, integral skin foams, rigid foams, and polyurethane elastomers.

The polyol used in the present invention includes conventional known polyols such as polyetherpolyols, polyesterpolyols, and polymer polyols; and flame-retardant polyols such as phosphorus-containing polyols and halogen-containing polyols. The polyols may be used singly or in combination of two or more thereof.

The polyetherpolyol can be produced from a compound having two or more active hydrogens as a source material, including polyhydric alcohols such as ethylene glycol, propylene glycol, glycerin, trimethylolpropane, and pentaerythrithol; amines such as ethylenediamine; alkanolamines such as ethanolamine, and diethanolamine; by addition thereto of an alkylene oxide such as ethylene oxide and propylene oxide according to a method, for example, shown in Polyurethane Handbook (written by Gunter Oertel) pages 42-53. Particularly preferred are polyols produced from glycerin as the starting material and having a molecular weight ranging from about 3000 to about 12000.

The polyesterpolyol includes those derived by treating byproducts or wastes in production of nylon, TMP, pentaerythritol, and phthalate polyesters as shown in Polyurethane Resin Handbook (written by Keiji IWTA).

The polymer polyol includes those derived by reacting a polyol with an ethylenic unsaturated monomer such as butadiene, acrylonitrile, and styrene in the presence of a radical polymerization catalyst as shown in Polyurethane Handbook (written by Gunter Oertel), pages 75-76. In particular, the polymer polyols having a molecular weight ranging from 5000 to 12000 are preferred.

The polyisocyanate employed in the present invention may be any known organic polyisocyanate, including aromatic polyisocyanates such as toluene diisocyanate (TDI), 4,4'-diphenylmethane diisocyanate (MDI), naphthylene diisocyanate, and xylylene diisocyanate; aliphatic polyisocyanates such as hexamethylene diisocyanate; alicyclic polyisocyanate such as dicyclohexyl diisocyanate, and isophorone diisocyanate; and mixtures thereof. The TDI and its derivatives include mixtures of 2,4-toluene diisocyante and 2,6-toluene diisocyante, and TDI-terminated isocyanate prepolymer derivatives. The MDI and its derivative include mixtures of MDI and its polymer of polyphenyl-polymethylene diisocyanate, and/or diphenylmethane diisocyanate derivatives having terminal isocyanate groups. In flexible foam production, particularly preferred are mixtures of TDI and MDI. In production of semi-rigid foams, integral skin foams, and rigid foams, particularly preferred is MDI.

The isocyanate index in the present invention is usually in the range from 70 to 130 in production of flexible foams, semi-rigid foams, and integral skin foams, and in the range from 70 to 250 in production of rigid foams and urethane elastomers, but is not specially limited thereto.

A blowing agent may be used, if necessary, in the present invention. Water and/or a halogenated hydrocarbon are useful as the blowing agent. The halogenated hydrocarbon includes known halogenated methanes and halogenated ethanes such as methylene chloride, trichlorofluoromethane, dichlorodifluoromethane, dichlorotrifluoroethane, and dichloromonofloromethane. Water is particularly preferred as the blowing agent, an is used in an amount usually 2 parts by weight or more, preferably ranging from 3.0 to 8.0 parts by weight based on 100 parts by weight of the polyol depending on the intended density of the foam.

A foam stabilizer may be used, if necessary, in the present invention. Known organic silicone type surfactants are useful in the present invention, being used in an amount ranging usually from 0.1 to 10 parts by weight based on 100 parts by weight of the polyol.

A crosslinking agent or a chain extender may be additionally used, if necessary, in the present invention. The crosslinking agent or chain extender includes polyhydric alcohols of a low molecular weight such as ethylene glycol, 1,4-butanediol, and glycerin; amine polyols of a low molecular weight such as diethanolamine, and triethanolamine; and polyamines such as ethylenediamine, xylylenediamine, and methylenebis(o-chloroaniline). Of these, diethanolamine, and triethanolamine are preferred.

Further, other known additives may be used, such as a coloring agent, a flame-retardant, an age resister, and the like. The additive is used in a known manner in an usual amount.

The delayed action catalyst of the present invention is capable of delaying the initiation of the foam-forming reaction after mixing of the source materials, a polyol and an organic diisocyanate, since the initial activity of the catalyst is lower. Thereby, the liquid mixture is readily handleable and is sufficiently flowable to enable the source material liquid to distribute to corners of a large mold.

The catalyst of the present invention increases its activity with the temperature rise of the reaction mixture during progress of the foam formation reaction. Thereby, the catalyst activity increases remarkably to distribute the bubbles formed by the urethane reaction throughout a complicated mold without formation of a defective portion, and to increase the rate of curing of the foam to shorten the demolding time, improving remarkably the productivity.

The delayed action catalyst of the present invention corrode little the metal materials such as the catalyst vessel, the foaming apparatus, and other apparatuses, thereby improving the productivity.

### Examples

The present invention is explained specifically by reference to Examples and Comparative Examples without liming the invention thereto.

Examples are shown for comparison of the catalysts of the present invention with conventional delayed action catalysts.

### Examples 1-5 and Comparative Examples 1-7:

The organic acid and triethylenediamine (TEDA, produced by Tosoh Corp.) were mixed in the prescribed ratio, as shown in Table 1. The mixture was diluted with pure water to the mixture concentration of 10% by weight.

Several iron nails were washed with hydrochloric acid, and weighed accurately. About 11 g of the nails were immersed in each of the above aqueous sample solutions, and left standing at room temperature. After four weeks, the iron nails were taken out, washed to remove the rust, and weighed. The corrosiveness of the sample was evaluated by the weight decrease of the nail. The results are shown in Table 1.

The sample solution of Examples 1 and 3 had a pH lower than 7.0, being corrosive and causing significant change of the weight of the nails, whereas the sample solutions of Examples 2, 4, and 5 had a pH higher than 7.0, being little corrosive, and causing no weight decrease of the iron nails.

On the other hand, the sample solutions employing oxalic acid, or malonic acid shown in Comparative Examples 1 and 2 caused significant weight decrease although the pH of the solution is higher than 7.0.

The sample solutions employing formic acid, acetic acid, 2-ethylhexanoic acid, citric acid, or malic acid caused significant weight decrease, being corrosive even though they have a pH higher than 7.0 respectively, as shown in Comparative Examples 3-7. The delayed action catalyst containing formic acid, acetic acid, or 2-ethylhexanoic acid does not exhibit the delaying effect when the amount of the acid is decreased to obtain a pH higher than 7.0 of the sample solution, as mentioned above.

Next, examples are shown in which the catalyst of the present invention or a conventional delayed action catalyst is employed for production of a flexible polyurethane foam or a rigid polyurethane foam.

### Example 6:

A prescribed amounts of triethylenediamine (TEDA, produced by Tosoh Corp.), adipic acid, and triethylene glycol as the organic solvent were placed in a 500-mL round bottomed glass flask equipped with a stirrer, and were mixed by stirring at 70°C in a nitrogen atmosphere to obtain a complete solution of a liquid catalyst composed of triethylenediamine and the organic carboxylic acid (Catalyst T-AD).

### Example 7:

A liquid catalyst containing triethylenediamine and an organic carboxylic acid was prepared in the same manner as in Example 6 except that suberic acid was used as the organic carboxylic acid (Catalyst T-SB).

### Example 8:

A liquid catalyst containing triethylenediamine and an organic carboxylic acid was prepared in the same manner as in Example 6 except that sebacic acid was used as the organic carboxylic acid (Catalyst T-CB).

### Comparative Example 8:

A prescribed amounts of triethylenediamine, and ethylene glycol as the organic solvent were placed in a 500-mL round bottomed glass flask equipped with a stirrer, and were mixed by stirring at 50°C in a nitrogen atmosphere to obtain a complete solution. Thereto, prescribed amounts of 95% formic acid and 2-ethylhexanoic acid were added dropwise from a dropping funnel by cooling the round-bottomed flask to obtain a liquid catalyst composed of trithylenediamine and the organic carboxylic acid (Catalyst T-F).

### Comparative Example 9:

A liquid catalyst containing triethylenediamine and an organic carboxylic acid was prepared in the same manner as in Comparative Example 8 except that citric acid was used as the organic carboxylic acid (Catalyst T-K).

### Comparative Example 10:

A liquid catalyst containing triethylenediamine and an organic carboxylic acid was prepared in the same manner as in Comparative Example 8 except that malic acid was used as the organic carboxylic acid (Catalyst T-R).

### Comparative Example 11:

Prescribed amounts of triethylenediamine (TEDA, produced by Tosoh Corp.), and ethylene glycol as the organic solvent were placed in a 500-mL round bottomed glass flask equipped with a stirrer, and were mixed by stirring at 50°C in a nitrogen atmosphere to obtain a liquid triethylenediamine solution (Catalyst T-L).

Table 2 summarizes the compositions of the prepared catalysts, and symbols thereof.

### Examples 9-11 and Comparative Examples 12-15:

Flexible polyurethane foams were prepared from the combination of the polyol and the polyisocyanate (isocyanate index: 105) shown in Table 3 by use of the catalyst prepared in Examples 6-8 and Comparative Examples 6-11 with a blowing agent and a foam stabilizer as shown in Table 3. The flexible polyurethane foam compositions were measured and evaluated for the reactivity for formation of polyurethane foam (cream time, gel time, and rise time), the delaying effect (delaying time in seconds of the cream time with the catalyst in comparison with that of Catalyst T-L), the properties (density and air-flowability) of molded foam products. The evaluation results are shown in Table 3.

As shown in Table 3, the delayed action catalyst of the present invention delays the initial reaction (cream time) in comparison with the conventional catalyst not blocked by an acid. The delaying effect was found to be more remarkable than that of the conventional delayed action catalyst blocked by formic acid. The catalyst of the present invention corrodes little the metal materials, and enables production of foams having a low density and a high air permeability. On the other hand, the catalyst employing citric acid or malic acid having a hydroxyl functional group exhibits the delaying effect, but produces foams having low air permeability and being poor in other foam properties.

Next, the delayed action catalyst employing pentamethyldiethylenetriamine was evaluated.

### Example 12:

A prescribed amounts of pentamethyldiethylenetriamine (TOYOCAT-DT, produced by Tosoh Corp.), adipic acid, and ethylene glycol as the organic solvent were placed in a 500-mL round bottomed glass flask equipped with a stirrer, and were mixed by stirring at 50°C in a nitrogen atmosphere to obtain a complete solution of a liquid catalyst composed of pentamethylenediethylenetriamine and the organic carboxylic acid (Catalyst DT-AD).

### Example 13:

A liquid catalyst containing pentamethyldiethylenetriamine and an organic carboxylic acid was prepared in the same manner as in Example 12 except that suberic acid was used as the organic carboxylic acid (Catalyst DT-SB).

### Example 14:

A liquid catalyst containing pentamethyldiethylenetriamine and an organic carboxylic acid was prepared in the same manner as in Example 12 except that sebacic acid was used as the organic carboxylic acid (Catalyst DT-CB).

### Comparative Example 16:

A prescribed amounts of pentamethyldiethylenetriamine and ethylene glycol as the organic solvent were placed in a 500-mL round bottomed glass flask equipped with a stirrer, and were mixed by stirring at 50°C in a nitrogen atmosphere to obtain a complete solution. Thereto, a prescribed amount of 95% formic acid was added dropwise from a dropping funnel by cooling the round bottomed flask to obtain a solution of a catalyst composed of trithylenediamine and the organic carboxylic acid (Catalyst DT-F).

### Comparative Example 17:

Prescribed amounts of pentamethyldiethylenetriamine and ethylene glycol as the organic solvent were placed in a 500-mL round bottomed glass flask equipped with a stirrer, and were mixed by stirring at 50°C in a nitrogen atmosphere to obtain a pentamethyldiethylenetriamine solution (Catalyst DT-L).

Table 4 summarizes the compositions of the prepared catalysts, and symbols thereof.

### Examples 15-17 and Comparative Examples 18-19:

Rigid polyurethane foams were prepared from the combination of the polyol and the polyisocyanate (isocyanate index: 110) shown in Table 5 by use of the catalyst prepared in Examples 12-14 and Comparative Examples 16-17 with a blowing agent and a foam stabilizer as shown in Table 4. The rigid polyurethane foam compositions were measured and evaluated for the reactivity (cream time, gel time, and rise time), the delaying effect (delaying time in seconds of the cream time with the catalyst in comparison with that of catalyst DT-L), the curing rate (Shore C hardness, 3 minutes after bubble formation), and the density of the foamed products. The evaluation results are shown in Table 5.

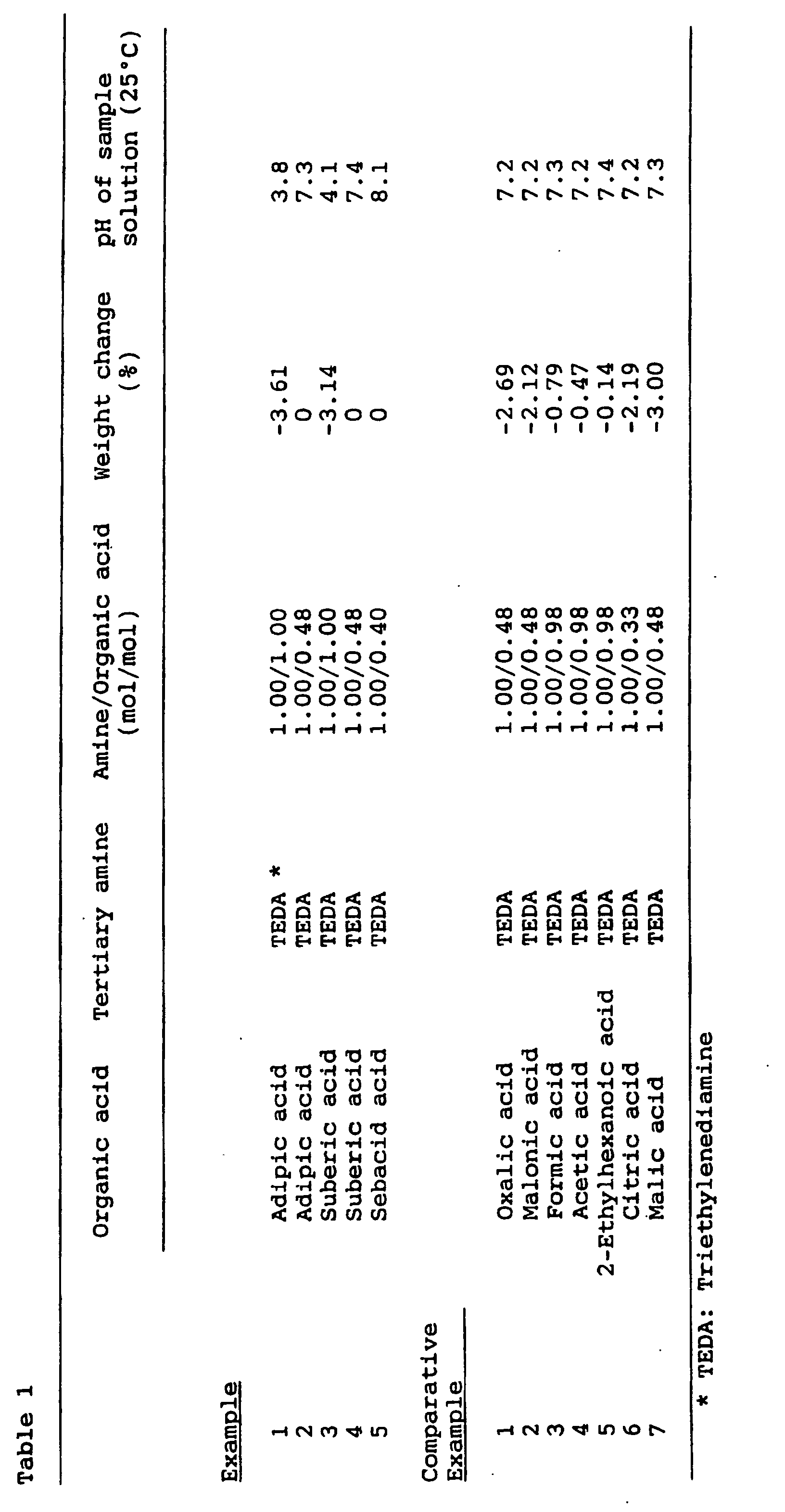

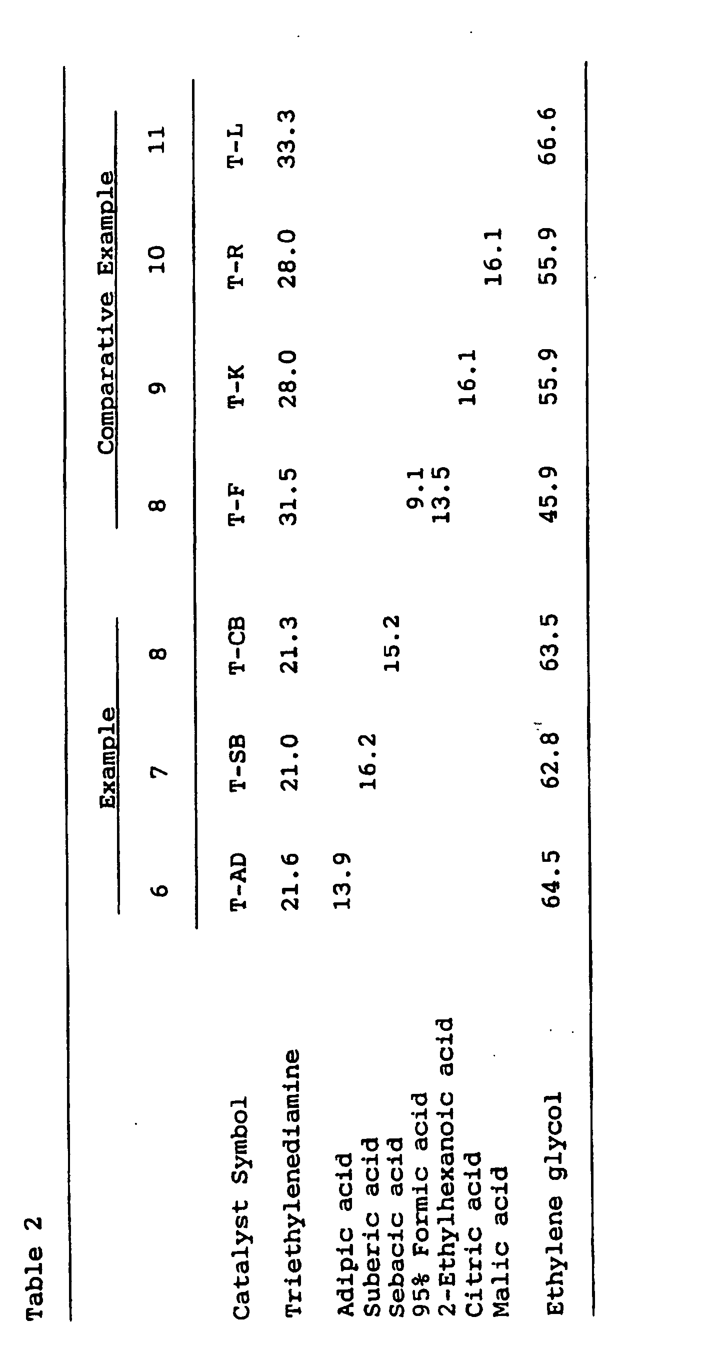

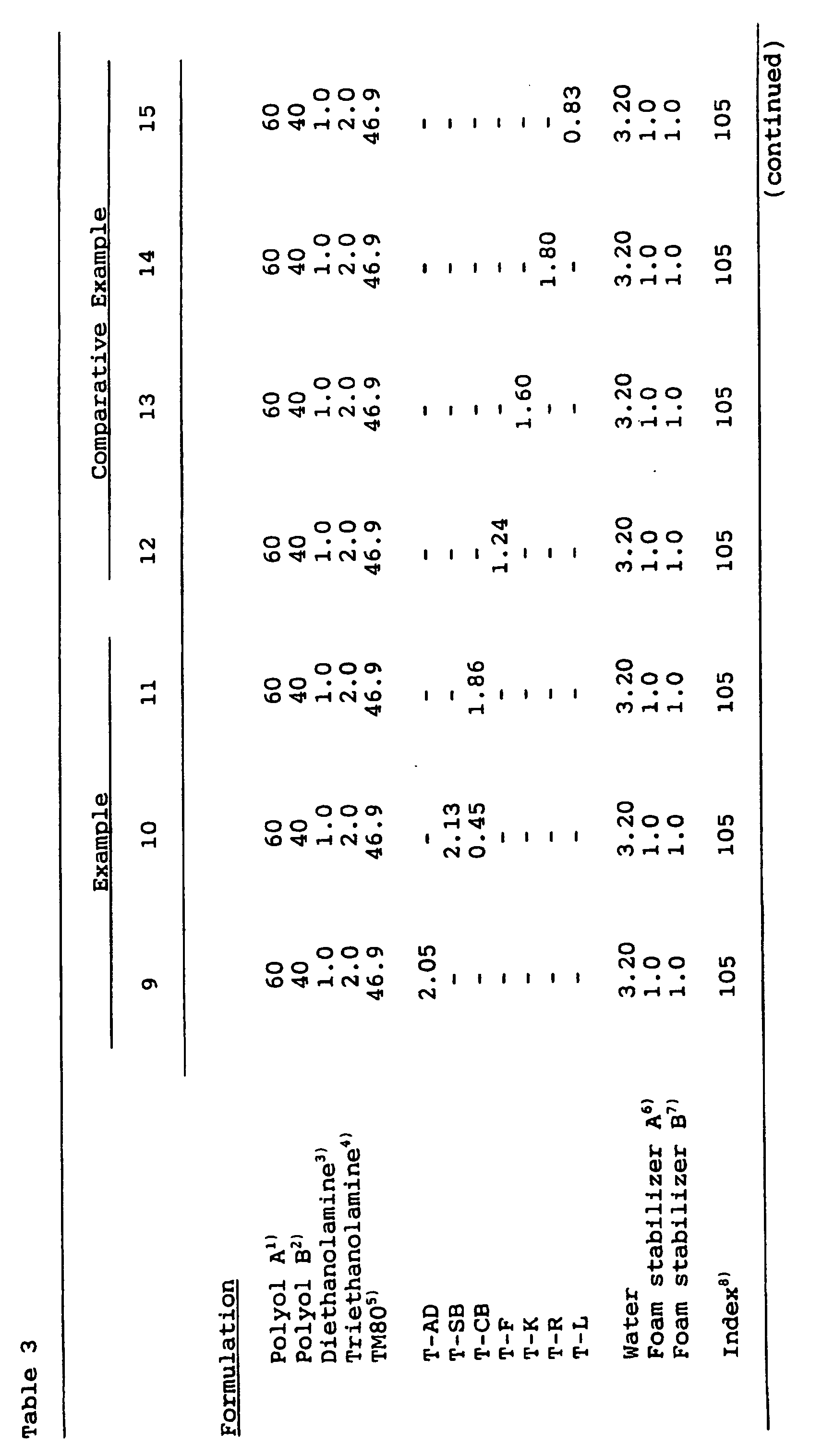

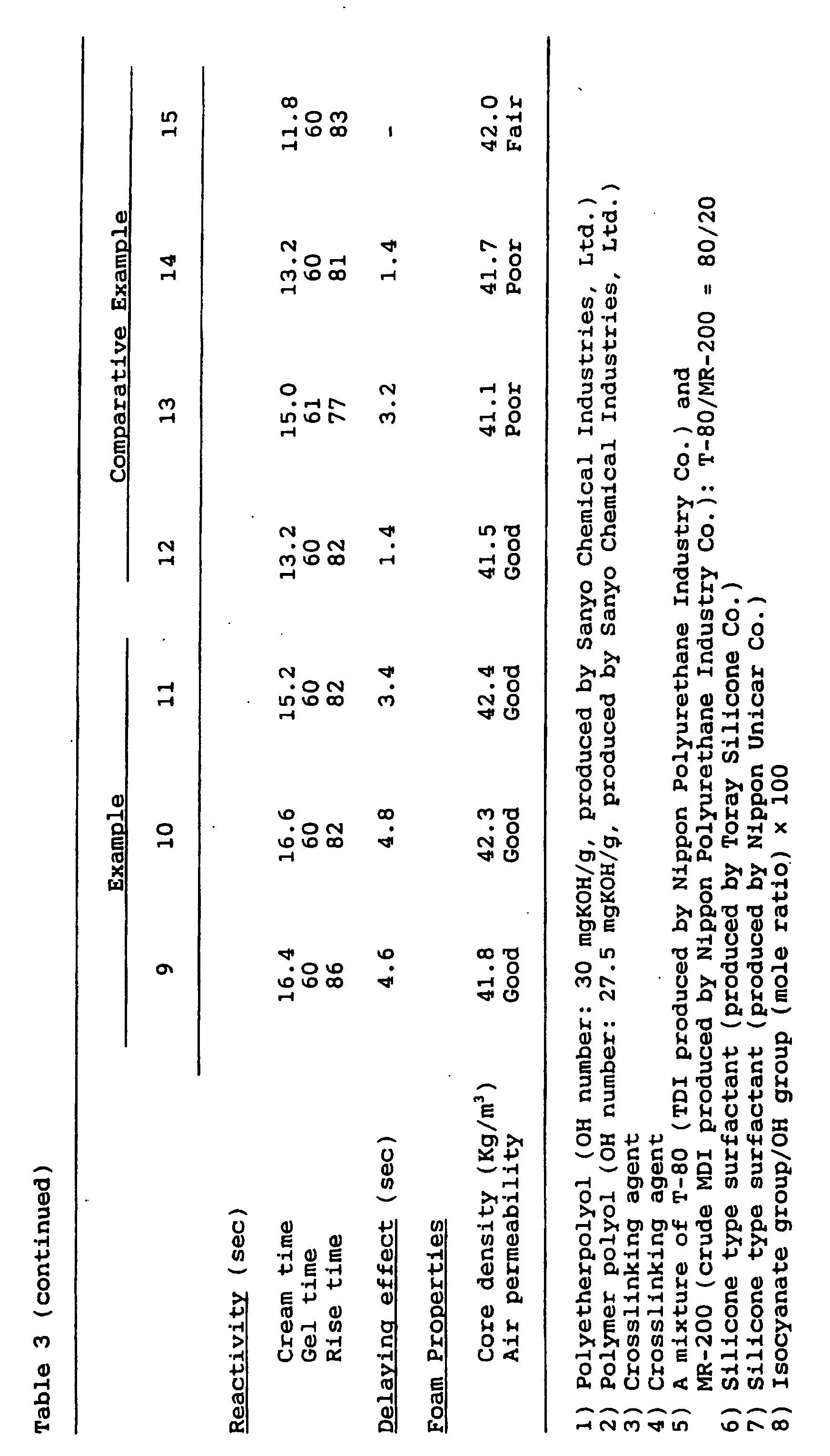

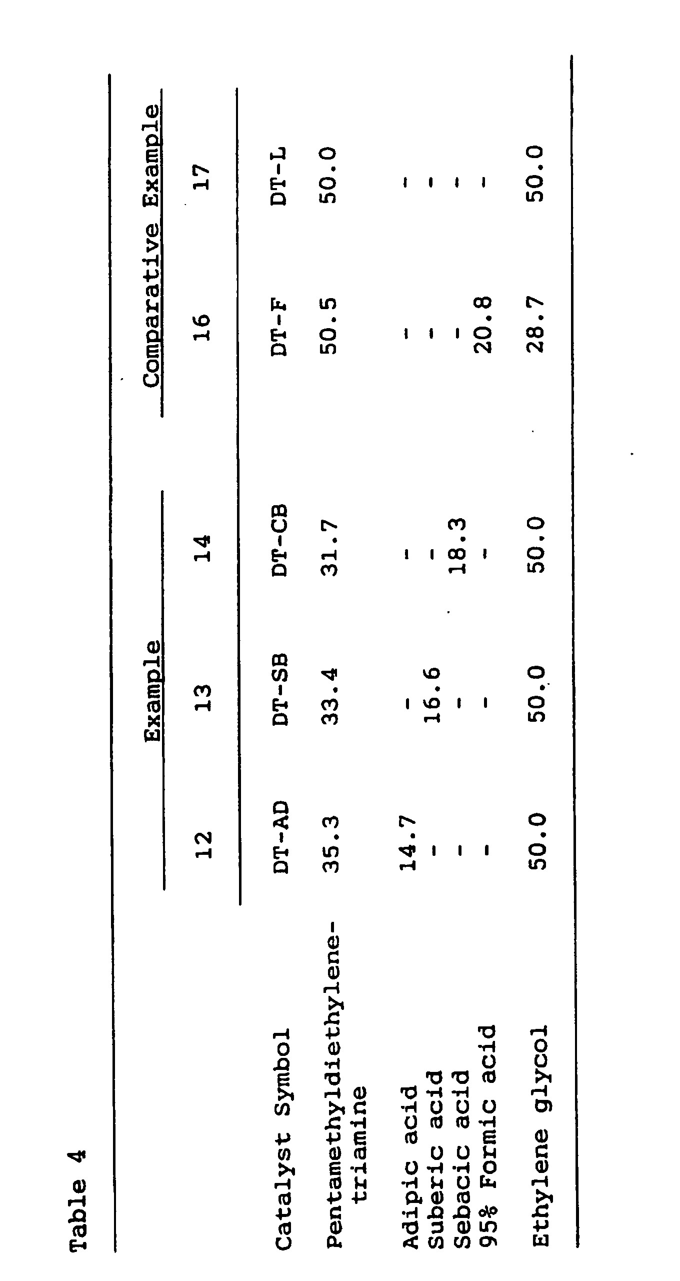

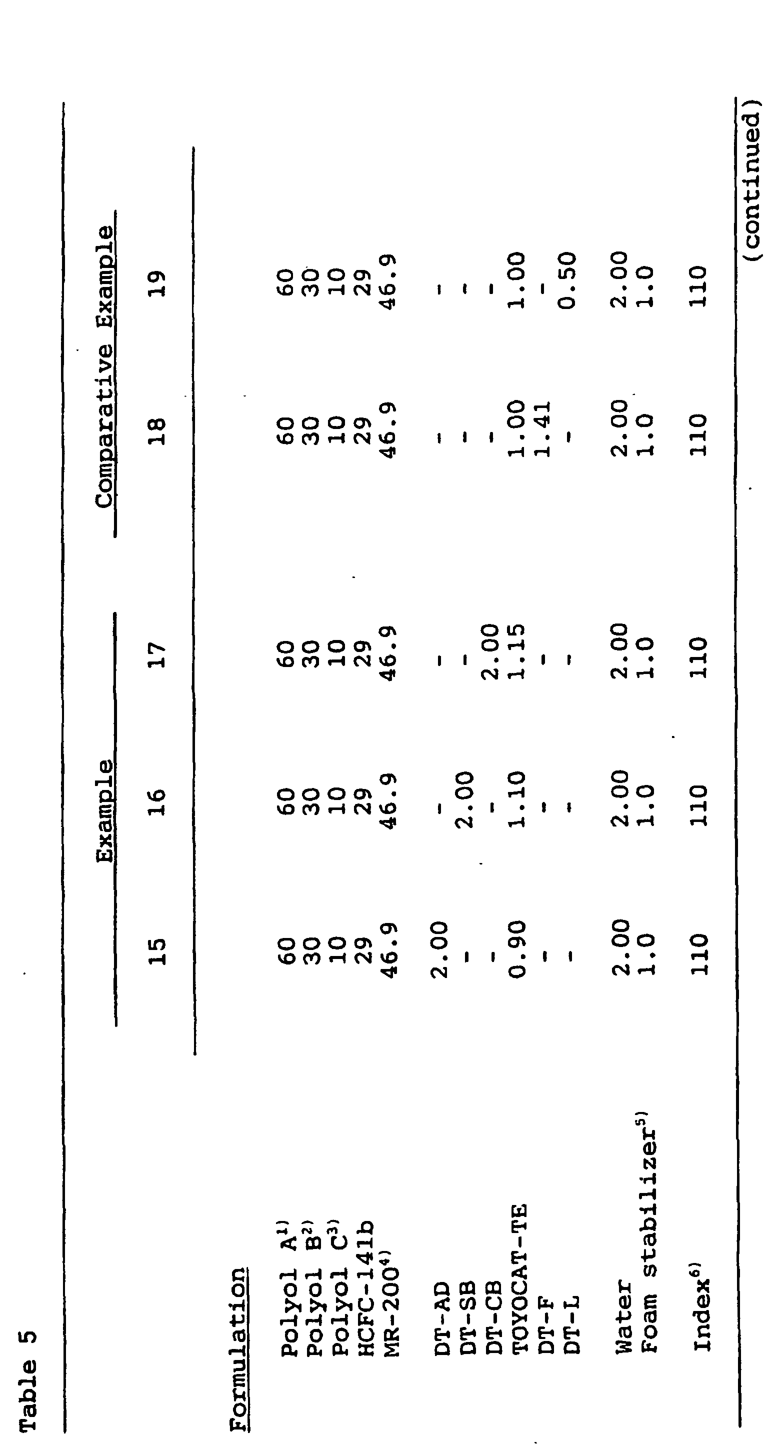

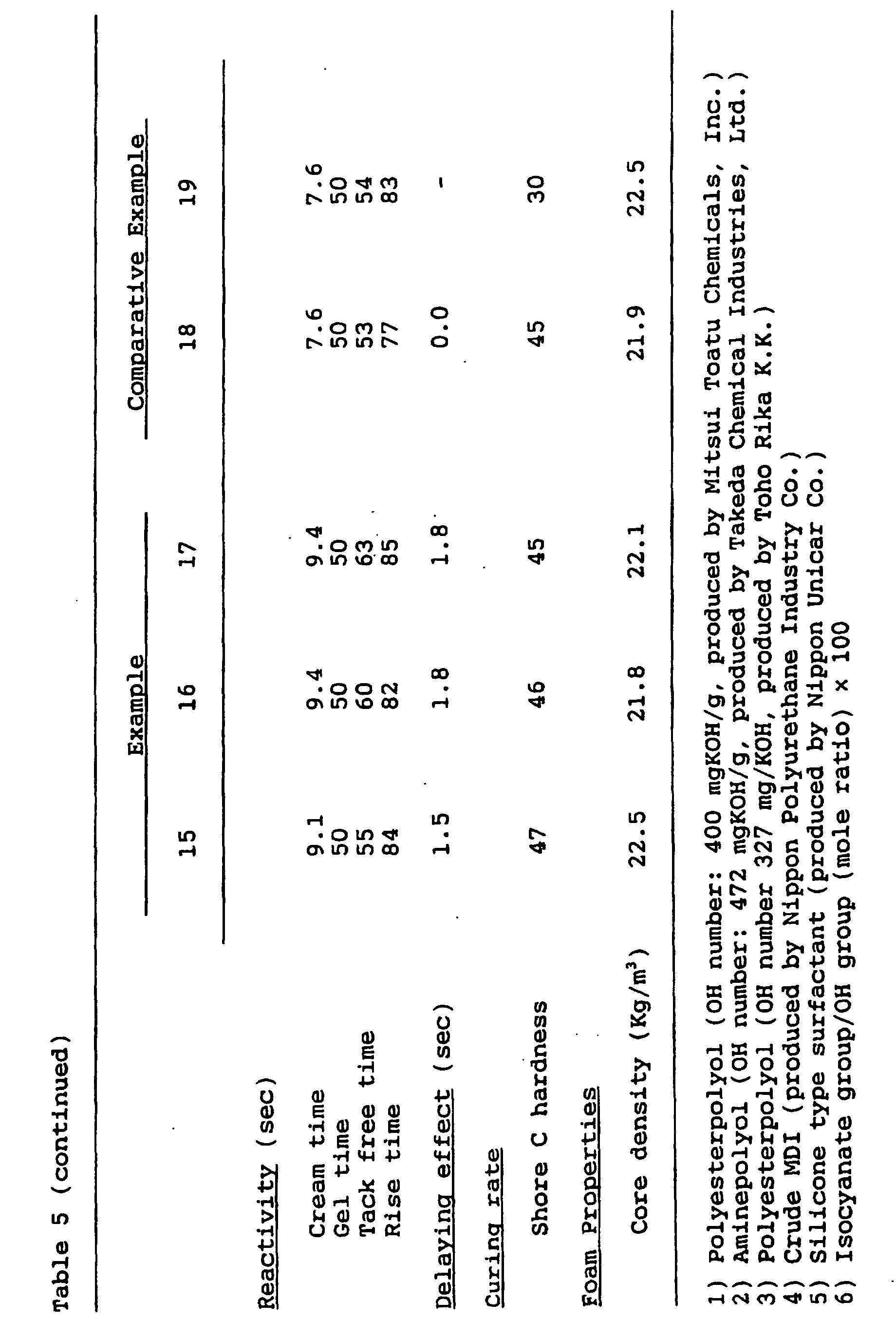

## Claims

1. A catalyst for polyurethane production, comprising a mixture of a tertiary amine selected from the group consisting of
N,N,N',N'-tetramethylethylene diamine,
N,N,N',N'-tetramethylpropylenediamine,
N,N,N',N",N"-pentamethyldiethylenetriamine,
N,N,N',N",N"-pentamethyl(3 - aminopropyl)ethylenediamine,
N,N,N',N",N"-pentamethyldipropylenetriamine,
N,N,N',N'-tetramethylguanidine,
1,8-diazabicyclo[5.4.0]undecene-7,
triethylenediamine,
N,N,N',N'-tetramethylhexamethylenediamine,
N-methyl-N'-(2-dimethylaminoethyl)piperazine,
N,N'-dimethylpiperazine, dimethylcyclohexylamine,
N-methylmorpholine, N-ethylmorpholine,
bis(2-dimethylaminoethyl) ether,
1-methylimidazole, 1,2-dimethylimidazole,
1-isobutyl-2-methylimidazole, and
1-dimethylaminopropylimidazole,
and a saturated dicarboxylic acid represented by General Formula:
HOOC-(CH₂)ₙ-COOH
where n is an integer of from 2 to 14,
**characterized in that**, wherein the tertiary amine and the saturated dicarboxylic acid are mixed in the ratio such that an aqueous solution of the mixture shows a pH not lower than 7.0.

2. The catalyst according to claim 1, wherein the tertiary amine is selected from the group consisting of triethylenediamine,
N,N,N',N'-tetramethylethylenediamine,
N,N,N',N",N"-pentamethyldiethylenetriamine,
N,N,N',N'-tetramethylhexamethylenediamine,
dimethylcyclohexylamine,
bis(2-dimethylaminoethyl) ether, and
1,2-dimethylimidazole, and mixtures thereof.

3. The catalyst according to claim 1 or 2, wherein the saturated dicarboxylic acid is selected from the group consisting of adipic acid, suberic acid, and sebacic acid, and mixtures thereof.

4. The catalyst according to any preceding claim, wherein a further catalyst is added to the mixture of the tertiary amine and the saturated dicarboxylic acid.

5. The catalyst according to claim 4, wherein the further catalyst is selected from known tertiary amines and quaternary ammonium salts.

6. The catalyst as claimed in claim 4 or claim 5, wherein the further catalyst is selected from the group consisting of
N,N,N',N'-tetramethylethylenediamine,
N,N,N',N'-tertramethylpropylenediamine,
N,N,N',N",N"-pentamethyldiethylenetriamine,
N,N,N',N",N"-pentamethyl(3-aminopropryl)ethylenediamine,
N,N,N',N",N"-pentamethyldipropylenetriamine,
N,N,N',N'-tetramethylguanidine,
1,3,5-tris(N,N'-dimethylaminopropryl)hexahydro-s-triazine,
1,8-diazabicyclo[5.4.0]undecene-7,
triethylenediamine,
N,N,N',N'-tetramethylhexamethylenediamine,
N-methyl-N'-(2-dimethylaminoethyl)piperazine
N-methylmorpholine, N-ethylmorpholine,
bis(2-dimethylaminoethyl) ether,
1-methylimidazole, 1,2-dimethylimidazole,
1-isobutyl-2-2methylimidazole, and
1-dimethylaminopropylimidazole.

7. The catalyst as claimed in any one of claims 4 to 6, wherein the additional tertiary amine is used in an amount ranging from 0 to 0.3 parts by weight based on 1.0 parts by weight of the mixture of the tertiary amine and the saturated dicarboxylic acid.

8. A process for producing a polyurethane by reaction of a polyol and an organic polyisocyanate in the presence of a catalyst, and optionally of a blowing agent, a surfactant, or other additives, wherein the catalyst is selected from the catalysts set forth in any of the claims 1 to 7.

## Patentansprüche

1. Katalysator für die Polyurethanherstellung, umfassend ein Gemisch aus einem tertiären Amin welches ausgewählt ist aus
N,N,N',N'-Tetramethylethylendiamin,
N,N,N',N'-Tetramethylpropylendiamin,
N,N,N',N",N"-Pentamethyldiethylentriamin,
N,N,N',N",N"-Pentamethyl-(3-aminopropyl)ethylendiamin,
N,N,N',N",N"-Pentamethyldipropylentriamin,
N,N,N',N'-Tetramethylguanidin,
1,8-Diazabicyclo[5.4.0]undecen-7,
Triethylendiamin,
N,N,N',N'-Tetramethylhexamethylendiamin,
N-Methyl-N'-(2-dimethylaminoethyl)piperazin,
N,N'-Dimethylpiperazin,
Dimethylcyclohexylamin,
N-Methylmorpholin,
N-Ethylmorpholin,
Bis(2-Dimethylaminoethyl)ether,
1-Methylimidazol,
1,2-Dimethylimidazol,
1-Isobutyl-2-methylimidazol, und
1-Dimethylaminopropylimidazol,
und einer gesättigten Dicarbonsäure der allgemeinen Formel
HOOC-(CH₂)ₙ-COOH
wobei n eine ganze Zahl von 2 bis 14 ist,
**dadurch gekennzeichnet, dass** das tertiäre Amin und die gesättigte Dicarbonsäure in solch einem Verhältnis gemischt werden, das eine wässrige Lösung des Gemischs einen pH-Wert von nicht geringer als 7.0 aufweist.

2. Katalysator gemäß Anspruch 1, wobei das tertiäre Amin ausgewählt ist aus
Triethylendiamin,
N,N,N',N'-Tetramethylethylendiamin,
N,N,N',N",N"-Pentamethyldiethylentriamin,
N,N,N',N'-Tetramethylhexamethylendiamin,
Dimethylcyclohexylamin,
Bis(2-Dimethylaminoethyl)ether, und
1,2-Dimethylimidazol,
und Gemischen davon.

3. Katalysator gemäß Anspruch 1 oder 2, wobei die gesättigte Dicarbonsäure ausgewählt ist aus Adipinsäure, Suberinsäure und Sebacinsäure und Gemischen davon.

4. Katalysator gemäß einem der vorstehenden Ansprüche, wobei ein weiterer Katalysator zu dem Gemisch aus dem tertiären Amin und der gesättigten Dicarbonsäure hinzugefügt wird.

5. Katalysator gemäß Anspruch 4, wobei ein weiterer Katalysator ausgewählt ist aus bekannten tertiären Aminen und quartären Ammoniumsalzen.

6. Katalysator gemäß Anspruch 4 oder Anspruch 5, wobei der weitere Katalysator ausgewählt ist aus
N,N,N',N'-Tetramethylethylendiamin,
N,N,N',N'-Tetramethylpropylendiamin
N,N,N',N",N"-Pentamethyldiethylentriamin,
N,N,N',N",N"-Pentamethyl-(3-aminopropyl)ethylendiamin,
N,N,N',N",N"-Pentamethyldipropylentriamin,
N,N,N',N'-Tetramethylguanidin,
1,3,5-Tris(N,N'-Dimethylaminopropyl)hexahydro-s-triazin,
1,8-Diazabicyclo[5.4.0]undecen-7,
Triethylendiamin,
N,N,N',N'-Tetramethylhexamethylendiamin,
N-Methyl-N'-(2-dimethylaminoethyl)piperazin,
N-Methylmorpholin,
N-Ethylmorpholin,
Bis(2-Dimethylaminoethyl)ether,
1-Methylimidazol,
1,2-Dimethylimidazol,
1-Isobutyl-2-methylimidazol, und
1-Dimethylaminopropylimidazol.

7. Katalysator gemäß einem der Ansprüche 4 bis 6, wobei das zusätzliche tertiäre Amin in einer Menge im Bereich von 0 bis 0,3 Gewichtsteilen, bezogen auf 1,0 Gewichtsteilen des Gemischs aus dem tertiären Amin und der gesättigten Dicarbonsäure, verwendet wird.

8. Verfahren zur Herstellung eines Polyurethans durch Umsetzung eines Polyols und eines organischen Polyisocyanats in Gegenwart eines Katalysators und gegebenenfalls eines Treibmittels, eines grenzflächenaktiven Mittels oder anderen Additiven, wobei der Katalysator ausgewählt ist aus den Katalysatoren gemäß einem der Ansprüche 1 bis 7.

## Revendications

1. Catalyseur pour la production de polyuréthane, comprenant un mélange d'une amine tertiaire choisie dans le groupe constitué par
la N,N,N',N'-tétraméthyléthylènediamine,
la N,N,N',N'-tétraméthylpropylènediamine,
la N,N,N',N",N"-pentaméthyldiéthylènetriamine,
la N,N,N',N",N"-pentaméthyl(3-aminopropyl)éthylènediamine,
la N,N,N',N",N"-pentaméthyldipropylènetriamine,
la N,N,N',N'-tétraméthylguanidine,
le 1,8-diazabicyclo[5.4.0]undécène-7,
la triéthylènediamine,
la N,N,N',N'-tétraméthylhexaméthylènediamine,
la N-méthyl-N'-(2-diméthylaminoéthyl)pipérazine,
la N,N'-diméthylpipérazine, la diméthylcyclohexylamine,
la N-méthylmorpholine, la N-éthylmorpholine,
le bis(2-diméthylaminoéthyl)éther,
le 1-méthylimidazole, le 1,2-diméthylimidazole,
le 1-isobutyl-2-méthylimidazole, et le
1-diméthylaminopropylimidazole,
et d'un acide dicarboxylique saturé représenté par la Formule Générale :
HOOC- (CH₂)ₙ-COOH
où n est un nombre entier de 2 à 14,
**caractérisé en ce que**, dans lequel l'amine tertiaire et l'acide dicarboxylique saturé sont mélangés dans le rapport tel que une solution aqueuse du mélange présente un pH pas inférieur à 7,0.

2. Catalyseur selon la revendication 1, dans lequel l'amine tertiaire est choisie dans le groupe constitué par
la triéthylènediamine,
la N,N,N',N'-tétraméthyléthylènediamine,
la N,N,N',N",N"-pentaméthyldiéthylènetriamine,
la N,N,N',N'-tétraméthylhexaméthylènediamine,
la diméthylcyclohexylamine,
le bis(2-diméthylaminoéthyl)éther, et
le 1,2-diméthylimidazole, et les mélanges de ceux-ci.

3. Catalyseur selon la revendication 1 ou 2, dans lequel l'acide dicarboxylique saturé est choisi dans le groupe constitué par l'acide adipique, l'acide subérique, et l'acide sébacique, et les mélanges de ceux-ci.

4. Catalyseur selon l'une quelconque des revendications précédentes, dans lequel un autre catalyseur est ajouté au mélange de l'amine tertiaire et de l'acide dicarboxylique saturé.

5. Catalyseur selon la revendication 4, dans lequel l'autre catalyseur est choisi parmi les amines tertiaires et sels d'ammonium quaternaire connus.

6. Catalyseur tel que revendiqué dans la revendication 4 ou la revendication 5, dans lequel l'autre catalyseur est choisi dans le groupe constitué par
la N,N,N',N'-tétraméthyléthylènediamine,
la N,N,N',N'-tétraméthylpropylènediamine,
la N,N,N',N",N"-pentaméthyldiéthylènetriamine,
la N,N,N',N",N"-pentaméthyl(3-aminopropyl)éthylènediamine,
la N,N,N',N",N"-pentaméthyldipropylènetriamine,
la N,N,N',N'-tétraméthylguanidine,
la 1,3,5-tris(N,N-diméthylaminopropyl)hexahydro-s-triazine,
le 1,8-diazabicyclo[5.4.0]undécène-7,
la triéthylènediamine,
la N,N,N',N'-tétraméthylhexaméthylènediamine,
la N-méthyl-N'-(2-diméthylaminoéthyl)pipérazine,
la N-méthylmorpholine, la N-éthylmorpholine,
le bis(2-diméthylaminoéthyl)éther,
le 1-méthylimidazole, le 1,2-diméthylimidazole,
le 1-isobutyl-2-méthylimidazole, et
le 1-diméthylaminopropylimidazole.

7. Catalyseur tel que revendiqué dans l'une quelconque des revendications 4 à 6, dans lequel l'amine tertiaire additionnelle est utilisée dans une quantité se situant dans la gamme allant de 0 à 0,3 parties en poids sur la base de 1,0 partie en poids du mélange de l'amine tertiaire et de l'acide dicarboxylique saturé.

8. Procédé pour produire un polyuréthane par réaction d'un polyol et d'un polyisocyanate organique en présence d'un catalyseur, et éventuellement d'un agent gonflant, d'un tensioactif, ou d'autres additifs, dans lequel le catalyseur est choisi parmi les catalyseurs formulés dans l'une quelconque des revendications 1 à 7.
